(19) Europäisches Patentamt
European Patent Office
Office européen des brevets

(11) Veröffentlichungsnummer: **0 066 760 A2**

(12) **EUROPÄISCHE PATENTANMELDUNG**

(21) Anmeldenummer: **82104485.6**

(22) Anmeldetag: **22.05.82**

(51) Int. Cl.³: **C 07 C 103/46**, A 01 N 53/00

(30) Priorität: **04.06.81 DE 3122240**

(43) Veröffentlichungstag der Anmeldung: **15.12.82 Patentblatt 82/50**

(84) Benannte Vertragsstaaten: **BE CH DE FR GB IT LI NL**

(71) Anmelder: **BAYER AG, Zentralbereich Patente, Marken und Lizenzen, D-5090 Leverkusen 1, Bayerwerk (DE)**

(72) Erfinder: **Amrhein, Nikolaus, Prof. Dr., Haarholzer Strasse 36, D-4630 Bochum 1 (DE)**
Erfinder: **Skorupka, Hubert, Insterburger Strasse 54, D-4600 Dortmund 18 (DE)**
Erfinder: **Tophof, Susanne, Markstrasse 381, D-4630 Bochum 1 (DE)**

(54) **1-Amino-cyclopropancarbonsäure-Derivate, Verfahren zu deren Herstellung und deren Verwendung als Pflanzenwuchsregulatoren.**

(57) 1-Amino-cyclopropancarbonsäure-Derivate der Formel

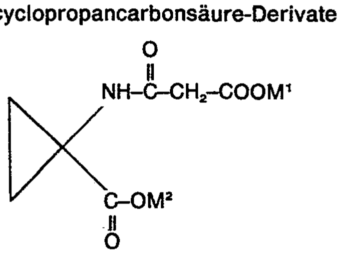

(I)

in welcher

M¹ und M² für Wasserstoff, Ammonium, ein Alkalimetall, ein Erdalkalimetall-Äquivalent oder ein Äquivalent eines Mangan-Kations stehen,
ein Verfahren zu deren Herstellung und deren Verwendung zur Regulierung des Pflanzenwachstums.

N-Malonyl-2-aminocyclopropancarbonsäure-dibenzylester der Formel

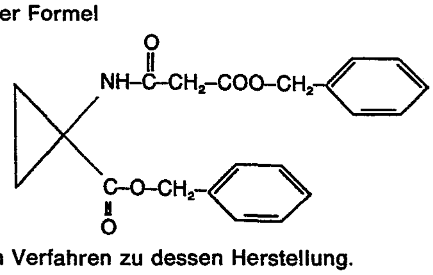

(II)

und ein Verfahren zu dessen Herstellung.

EP 0 066 760 A2

0066760

BAYER AKTIENGESELLSCHAFT 5090 Leverkusen, Bayerwerk
Zentralbereich
Patente, Marken und Lizenzen Dü/kl-c
Ia

# 1-Amino-cyclopropancarbonsäure-Derivate, Verfahren zu deren Herstellung und deren Verwendung als Pflanzenwuchsregulatoren

Die Erfindung betrifft neue 1-Amino-cyclopropancarbonsäure-Derivate, ein Verfahren zu deren Herstellung sowie deren Verwendung zur Regulierung des Pflanzenwachstums.

Es ist bereits bekannt geworden, daß zahlreiche Cycloalkancarbonsäure-Derivate zur Regulierung des Pflanzenwachstums geeignet sind (vgl. DE-OS 28 24 517). So läßt sich zum Beispiel N-Formyl-1-amino-cyclopropancarbon-säure für diesen Zweck verwenden. Die Wirksamkeit dieses Stoffes ist gut, läßt jedoch in manchen Fällen noch zu wünschen übrig.

Es wurden nun neue 1-Amino-cyclopropancarbonsäure-Derivate der Formel

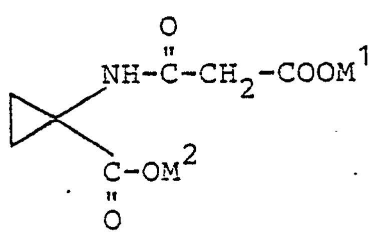

(I)

in welcher

$M^1$ und $M^2$ für Wasserstoff, Ammonium, ein Alkalimetall, ein Erdalkalimetall-Äquivalent oder ein Äquivalent eines Mangan-Kations stehen,

gefunden.

Weiterhin wurde gefunden, daß man die 1-Amino-cyclopropancarbonsäure-Derivate der Formel (I) erhält, wenn man N-Malonyl-1-aminocyclopropancarbonsäure-di-benzylester der Formel

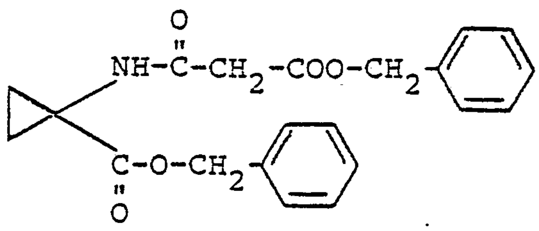

(II)

in Gegenwart eines Katalysators sowie in Gegenwart eines Verdünnungsmittels hydriert und gegebenenfalls anschließend die dabei entstehende Verbindung der Formel

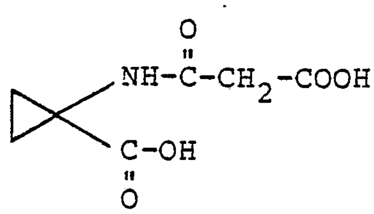

(I-1)

mit Basen der Formel

M OH (III)

0066760

in welcher

M für Ammonium, ein Alkalimetall, ein Erdalkalimetall-Äquivalent oder ein Äquivalent eines Mangan-Kations steht,

in Gegenwart eines Verdünnungsmittels umsetzt.

Außerdem wurde gefunden, daß sich die neuen 1-Amino-cyclopropancarbonsäure-Derivate der Formel (I) durch starke pflanzenwuchsregulierende Eigenschaften auszeichnen.

Überraschenderweise besitzen die erfindungsgemäßen 1-Amino-cyclopropancarbonsäure-Derivate der Formel (I) eine bessere pflanzenwuchsregulierende Wirksamkeit als die N-Formyl-1-amino-cyclopropancarbonsäure, welches der konstitutionell ähnlichste vorbekannte Wirkstoff gleicher Wirkungsrichtung ist.

Die erfindungsgemäßen 1-Amino-cyclopropancarbonsäure-Derivate sind durch die Formel (I) definiert. In dieser Formel stehen $M^1$ und $M^2$ vorzugsweise für Wasserstoff, Ammonium, Natrium, Kalium, ein Äquivalent eines Magnesium- oder Calcium-Kations oder für ein Äquivalent eines Mangan-II-Kations. - Die erfindungsgemäßen Stoffe können auch in Form von Säureadditions-Salzen vorliegen.

Verwendet man bei der Hydrierung von N-Malonyl-1-aminocyclopropancarbonsäure-di-benzylester Wasserstoff

in Gegenwart von Palladium auf Aktivkohle als Hydrierungsmittel, so kann der Verlauf des erfindungsgemäßen Verfahrens durch das folgende Formelschema wiedergegeben werden:

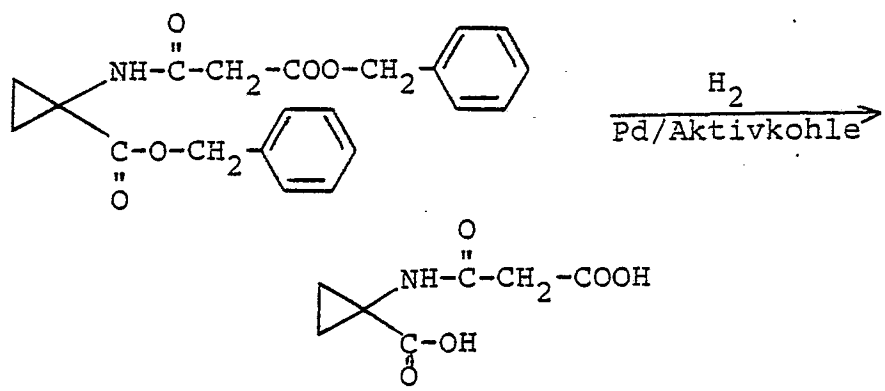


Der bei dem erfindungsgemäßen Verfahren als Ausgangsstoff benötigte N-Malonyl-1-aminocyclopropancarbonsäure-dibenzylester der Formel (II) ist bisher noch nicht bekannt. Der betreffende Stoff läßt sich jedoch in einfacher Weise herstellen, indem man 1-Amino-cyclopropancarbonsäurebenzylester der Formel

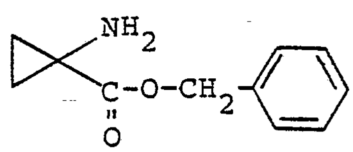

(IV)

bzw. dessen Hydrochlorid mit Kalium-monobenzylmalonat der Formel

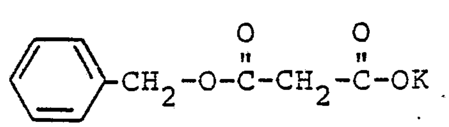

(V)

in Gegenwart eines Katalysators sowie in Gegenwart eines Verdünnungsmittels umsetzt.

Der bei dem obigen Verfahren als Ausgangsstoff benötigte 1-Amino-cyclopropancarbonsäure-benzylester der Formel (IV) bzw. dessen Hydrochlorid sind bekannt (vgl. DE-OS 28 24 517). Das weiterhin als Ausgangsstoff benötigte Kalium-monobenzylmalonat der Formel (V) ist ebenfalls bekannt (vgl. Can. J. Biochem. 46, (1968) 797 - 806).

Als Katalysatoren können bei dem obigen Verfahren zur Herstellung von N-Malonyl-1-aminocyclopropancarbonsäure-dibenzylester alle für derartige Aminosäure-Synthesen üblichen Reaktionsbeschleuniger verwendet werden. Vorzugsweise in Betracht kommt Dicyclohexylcarbodiimid.

Als Verdünnungsmittel können bei der obigen Umsetzung alle inerten organischen Solventien eingesetzt werden. Vorzugsweise in Frage kommen chlorierte aliphatische Lösungsmittel, wie Methylenchlorid und Chloroform.

Die Reaktionstemperaturen können bei der Herstellung von N-Malonyl-1-amino-cyclopropancarbonsäure-dibenzylester nach dem obigen Verfahren innerhalb eines bestimmten Bereiches variiert werden. Im allgemeinen arbeitet man bei Temperaturen zwischen -10°C und +50 °C, vorzugsweise zwischen -5 °C und +30°C. Die Umsetzung wird im allgemeinen bei Normaldruck vorgenommen.

Bei der Durchführung des obigen Verfahrens zur Herstellung von N-Malonyl-1-aminocyclopropancarbonsäure-dibenzylester setzt man auf 1 Mol an 1-Amino-cyclopropancarbonsäure-benzylester der Formel (IV) bzw. dessen Hydrochlorid 1 Mol oder auch einen Überschuß an Kalium-monobenzylmalonat der Formel (V) sowie eine geringe Menge an Katalysator ein. Die Aufarbeitung erfolgt nach üblichen Methoden.

Als Hydrierungsmittel kommt bei dem erfindungsgemäßen Verfahren katalytisch aktiviertes Wasserstoffgas in Frage.

Als Katalysatoren können bei der Hydrierung nach dem erfindungsgemäßen Verfahren alle für derartige Hydrierungen üblichen Katalysatoren verwendet werden. Vorzugsweise in Betracht kommen Palladium oder Platin auf Aktivkohle.

Als Verdünnungsmittel können bei der Hydrierung nach dem erfindungsgemäßen Verfahren alle für derartige Hydrierungen üblichen Solventien eingesetzt werden. Vorzugsweise in Frage kommt Ethylacetat.

Die Reaktionstemperaturen können bei der erfindungsgemäßen Hydrierung innerhalb eines gewissen Bereiches variiert werden. Im allgemeinen arbeitet man bei Temperaturen zwischen -10°C und +50°C, vorzugsweise zwischen 0 °C und +30 °C.

Bei der Durchführung der Hydrierung nach dem erfindungsgemäßen Verfahren setzt man N-Malonyl-1-aminocyclopropancarbonsäure-dibenzylester der Formel (II) in einem Verdünnungsmittel in Gegenwart eines Katalysators mit einem Überschuß an Wasserstoff um. Die Aufarbeitung erfolgt nach üblichen Methoden. Im allgemeinen geht man so vor, daß man das Reaktionsgemisch nach beendeter Hydrierung filtriert, das Filtrat einengt und den verbleibenden Rückstand nach üblichen Methoden reinigt.

Die bei der Durchführung der zweiten Stufe des erfindungsgemäßen Verfahrens als Reaktionskomponenten benötigten Basen sind durch die Formel (III) definiert. In dieser Formel steht M vorzugsweise für Ammonium, Natrium, Kalium, ein Äquivalent eines Magnesium- oder Calcium-Kations oder für ein Äquivalent eines Mangan-II-Kations.

Als Verdünnungsmittel können bei der Durchführung der zweiten Stufe des erfindungsgemäßen Verfahrens alle für derartige Salzbildungs-Reaktionen üblichen Solventien verwendet werden. Vorzugsweise arbeitet man in wäßrigem oder wäßrig-alkoholischem Medium.

Die Reaktionstemperaturen können bei der Herstellung der Salze in der zweiten Stufe des erfindungsgemäßen

Verfahrens innerhalb eines gewissen Bereiches variiert werden. Im allgemeinen arbeitet man bei Temperaturen zwischen 0°C und 50°C, vorzugsweise bei Raumtemperatur. - Diese Salzbildungs-Reaktion wird im allgemeinen bei Normaldruck durchgeführt.

Bei der Durchführung der zweiten Stufe des erfindungsgemäßen Verfahrens setzt man auf 1 Mol an N-Malonyl-1-amino-cyclopropancarbonsäure der Formel (I-1) 1 bis 3 Mol-Äquivalente oder auch einen größeren Überschuß an Base der Formel (III) ein. Die Aufarbeitung erfolgt nach üblichen Methoden.

Die erfindungsgemäßen Wirkstoffe greifen in den Metabolismus der Pflanzen ein und können deshalb als Wachstumsregulatoren eingesetzt werden.

Für die Wirkungsweise von Pflanzenwachstumsregulatoren gilt nach der bisherigen Erfahrung, daß ein Wirkstoff auch mehrere verschiedenartige Wirkungen auf Pflanzen ausüben kann. Die Wirkungen der Stoffe hängen im wesentlichen ab von dem Zeitpunkt der Anwendung bezogen auf das Entwicklungsstadium der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in bestimmter gewünschter Weise beeinflussen.

Pflanzenwuchsregulierende Stoffe können zum Beispiel zur Hemmung des vegetativen Wachstums der Pflanzen eingesetzt werden. Eine derartige Wuchshemmung ist unter anderem bei Gräsern von wirtschaftlichem Interesse, denn dadurch kann die Häufigkeit der Grasschnitte in Ziergärten, Park- und Sportanlagen, an Straßenrändern, auf Flughäfen oder in Obstanlagen reduziert werden. Von Bedeutung ist auch die Hemmung des Wuchses von krautigen und holzigen Pflanzen an Straßenrändern und in der Nähe von Pipelines oder Überlandleitungen oder ganz allgemein in Bereichen, in denen ein starker Zuwachs der Pflanzen unerwünscht ist.

Wichtig ist auch die Anwendung von Wachstumsregulatoren zur Hemmung des Längenwachstums von Getreide. Hierdurch wird die Gefahr des Umknickens ("Lagerns") der Pflanzen vor der Ernte verringert oder vollkommen beseitigt. Außerdem können Wachstumsregulatoren bei Getreide eine Halmverstärkung hervorrufen, die ebenfalls dem Lagern entgegenwirkt. Die Anwendung von Wachstumsregulatoren zur Halmverkürzung und Halmverstärkung erlaubt es, höhere Düngermengen auszubringen, um den Ertrag zu steigern, ohne daß die Gefahr besteht, daß das Getreide lagert.

Eine Hemmung des vegetativen Wachstums ermöglicht bei vielen Kulturpflanzen eine dichtere Anpflanzung, sodaß Mehrerträge bezogen auf die Bodenfläche erzielt werden können. Ein Vorteil der so erzielten kleineren Pflanzen ist auch, daß die Kultur leichter bearbeitet und beerntet werden kann.

Eine Hemmung des vegetativen Wachstums der Pflanzen kann auch dadurch zu Ertragsteigerungen führen, daß die Nährstoffe und Assimilate in stärkerem Maße der Blüten- und Fruchtbildung zugute kommen als den vegetativen Pflanzenteilen.

Mit Wachstumsregulatoren läßt sich häufig auch eine Förderung des vegetativen Wachstums erzielen. Dies ist von großem Nutzen, wenn die vegetativen Pflanzenteile geerntet werden. Eine Förderung des vegetativen Wachstums kann aber auch gleichzeitig zu einer Förderung des generativen Wachstums führen, dadurch daß mehr Assimilate gebildet werden, sodaß mehr oder größere Früchte entstehen.

Ertragssteigerungen können in manchen Fällen durch einen Eingriff in den pflanzlichen Stoffwechsel erreicht werden, ohne daß sich Änderungen des vegetativen Wachstums bemerkbar machen. Ferner kann mit Wachstumsregulatoren eine Veränderung der Zusammensetzung der Pflanzen erreicht werden, was wiederum zu einer Qualitätsverbesserung der Ernteprodukte führen kann. So ist es beispielsweise möglich, den Gehalt an Zucker in Zuckerrüben, Zuckerrohr, Ananas sowie in Zitrusfrüchten zu erhöhen oder den Proteingehalt in Soja oder Getreide zu steigern. Auch ist es beispielsweise möglich, den Abbau erwünschter Inhaltsstoffe, wie z.B. Zucker in Zuckerrüben oder Zuckerrohr, mit Wachstumsregulatoren vor oder nach der Ernte zu hemmen. Außerdem läßt sich die Produktion oder der Abfluß von sekundären Pflanzeninhaltsstoffen positiv beeinflussen. Als Beispiel sei die Stimulierung des Latexflusses bei Gummibäumen genannt.

Unter dem Einfluß von Wachstumsregulatoren kann es zur Ausbildung parthenokarper Früchte kommen. Ferner kann das Geschlecht der Blüten beeinflußt werden. Auch kann eine Sterilität des Pollens erzeugt werden, was bei der Züchtung und Herstellung von Hybridsaatgut eine große Bedeutung hat.

Tomaten oder Kaffee eine vollständige mechanische oder manuelle Beerntung in einem Arbeitsgang vorgenommen werden kann.

Durch Anwendung von Wachstumsregulatoren kann ferner die Samen- oder Knospenruhe der Pflanzen beeinflußt werden, sodaß die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen. Eine Verzögerung des Austriebes von Knospen oder der Keimung von Samen mit Hilfe von Wachstumsregulatoren kann in frostgefährdeten Gebieten erwünscht sein, um Schädigungen durch Spätfröste zu vermeiden.

Schließlich kann mit Wachstumsregulatoren eine Resistenz der Pflanzen gegen Frost, Trockenheit oder hohen Salzgehalt des Bodens induziert werden. Hierdurch wird die Kultivierung von Pflanzen in Gebieten möglich, die hierzu normalerweise ungeeignet sind.

Die Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch vermischen der Wirkstoffe mit Streckmitteln, also flüssigen Lösungsmitteln, unter Druck stehenden verflüssigten Gasen und / oder festen Trägerstoffen, gegebenenfalls unter Verwendung von oberflächenaktiven Mitteln, also Emulgiermitteln und / oder Dispergiermitteln und / oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in

Durch den Einsatz von Wachstumsregulatoren läßt sich die Verzweigung der Pflanzen steuern. Einerseits kann durch Brechen der Apikaldominanz die Entwicklung von Seitentrieben gefördert werden, was besonders im Zierpflanzenbau auch in Verbindung mit einer Wuchshemmung sehr erwünscht sein kann. Andererseits ist es aber auch möglich, das Wachstum der Seitentriebe zu hemmen. Für diese Wirkung besteht z.B. großes Interesse im Tabakanbau oder bei der Anpflanzung von Tomaten.

Unter dem Einfluß von Wachstumsregulatoren kann der Blattbestand der Pflanzen so gesteuert werden, daß ein Entblättern der Pflanzen zu einem gewünschten Zeitpunkt erreicht wird. Eine derartige Entlaubung spielt bei der mechanischen Beerntung der Baumwolle eine große Rolle ist aber auch in anderen Kulturen wie z.B. im Weinbau zur Erleichterung der Ernte von Interesse. Eine Entlaubung der Pflanzen kann auch vorgenommen werden, um die Transpiration der Pflanzen vor dem Verpflanzen herabzusetzen.

Ebenso läßt sich mit Wachstumsregulatoren der Fruchtfall steuern. Einerseits kann ein vorzeitiger Fruchtfall verhindert werden. Andererseits kann aber auch der Fruchtfall oder sogar das Abfallen der Blüten bis zu einem gewünschten Maße gefördert werden ("Ausdünnung"), um die Alternanz zu brechen. Unter Alternanz versteht man die Eigenart einiger Obstarten, endogen bedingt von Jahr zu Jahr sehr unterschiedliche Erträge zu bringen. Schließlich ist es möglich, mit Wachstumsregulatoren zum Zeitpunkt der Ernte die zum Ablösen der Früchte erforderlichen Kräfte zu reduzieren, um eine mechanische Beerntung zu ermöglichen oder eine manuelle Beerntung zu erleichtern.

Mit Wachstumsregulatoren läßt sich ferner eine Beschleunigung oder auch Verzögerung der Reife des Erntegutes vor oder nach der Ernte erreichen. Dieses ist von besonderem Vorteil, weil sich dadurch eine optimale Anpassung an die Bedürfnisse des Marktes herbeiführen läßt. Weiterhin können Wachstumsregulatoren in manchen Fällen die Fruchtausfärbung verbessern. Darüberhinaus kann mit Wachstumsregulatoren auch eine zeitliche Konzentrierung der Reife erzielt werden. Damit werden die Voraussetzungen dafür geschaffen, daß z.B. bei Tabak,

Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und / oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen o,1 und 95 Gewichtsprozent Wirkstoff, vorzugsweise zwischen o,5 und 9o %.

Die erfindungsgemäßen Wirkstoffe können in den Formulierungen in Mischung mit anderen bekannten Wirkstoffen vorliegen, wie Fungizide, Insektizide, Akarizide und Herbizide, sowie in Mischungen mit Düngemitteln und anderen Wachstumsregulatoren.

Die Wirkstoffe können als solche, in Form ihrer Formulierungen oder der daraus bereiteten Anwendungsformen, wie gebrauchsfertige Lösungen, emulgierbare Konzentrate, Emulsionen Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Die Aufwandmengen können in einem größeren Bereich variiert werden. Im allgemeinen verwendet man pro Hektar Bodenfläche o,ol bis 5o kg, bevorzugt o,o5 bis lo kg an Wirkstoff.

Für die Anwendungszeit gilt, daß die Anwendung der Wachstumsregulatoren in einem bevorzugten Zeitraum vorgenommen wird, dessen genaue Abgrenzung sich nach den klimatischen und vegetativen Gegebenheiten richtet.

Die Herstellung und die Verwendung der erfindungsgemäßen Stoffe geht aus den nachfolgenden Beispielen hervor.

## Herstellungsbeispiele

### Beispiel I-1

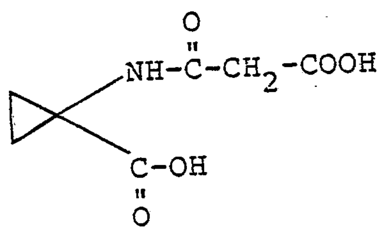

463 mg (1,26-mMol) N-Malonyl-1-amino-cyclopropancarbonsäure-di-benzylester werden in 10 ml eines 1:1 Gemisches von Ethylacetat und Methanol gelöst, mit 464 mg Palladium auf Aktivkohle versetzt und in einer Wasserstoffatmosphäre bei Raumtemperatur 90 Minuten unter Normaldruck hydriert. Zur Aufarbeitung filtriert man das Reaktionsgemisch und engt das Filtrat unter vermindertem Druck bis zur Trockne ein. Der verbleibende Rückstand wird in einem Gemisch, das zu gleichen Teilen aus Wasser und Ethanol besteht, aufgenommen und papierchormatographisch gereinigt, wobei als Laufmittel ein Gemisch aus 7 Teilen n-Propanol und 3 Teilen konzentriertem Ammoniak dient. Das Produkt wird mit Wasser/Ethanol = 1:1 eluiert. Das Eluat wird unter Stickstoffatmosphäre eingeengt und lyophilisiert. Man erhält auf diese Weise 182 mg (77 % der Theorie) an N-Malonyl-1-amino-cyclopropancarbonsäure vom Schmelzpunkt 158-160°C.

Herstellung des Ausgangsstoffes

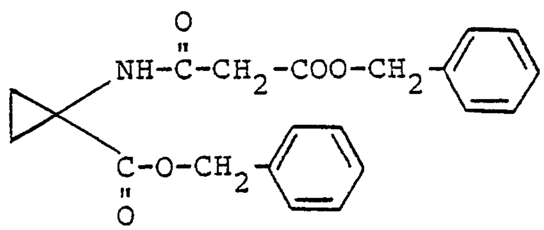

(II)

1,1375 g (5 mMol) Chlorwasserstoff-Additionssalz von 1-Amino-cyclopropancarbonsäure-benzylester und 1,16 g (5 mMol) Kalium-mono-benzylmalonat werden in 35 ml Methylenchlorid und 10 ml Wasser unter Zugabe von 1,236 g (6 mMol) Dicyclohexylcarbo-diimid eine Stunde unter Eiskühlung bei einer Temperatur zwischen 0°C und 5°C gerührt und anschließend 4 Stunden bei Raumtemperatur belassen. Zur Aufarbeitung wird der Niederschlag abfiltriert und mit 125 ml Ether gewaschen. Die organische Phase des Filtrats wird abgetrennt und nacheinander zunächst einmal mit 60 ml 1 N wäßriger Salzsäure dann zweimal mit je 60 ml gesättigter wäßriger Natriumhydrogencarbonat-Lösung und schließlich viermal mit je 60 ml Wasser gewaschen. Die organische Phase wird über Natriumsulfat getrocknet und nach dem Abfiltrieren bis zur Trübung mit Petrolether (Siedebereich 60-80°C) versetzt. Man läßt 24 Stunden bei 4°C und danach weitere 24 Stunden bei -18°C stehen. Der entstandene Niederschlag wird abfiltriert und aus Ethylacetat/Petrolether umkristallisiert. Man erhält auf diese Weise 926,4 mg (50,5 % der Theorie) an N-Malonyl-1-amino-cyclopropancarbonsäure-dibenzylester.

Beispiel A

Ethylenbildung

Lösungsmittel: 3o Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Aus Sojabohnenblättern werden Blattstücke gleicher Größe gestanzt. Diese werden zusammen mit 1 ml Wirkstoffzubereitung bzw. Kontrollösung in luftdicht verschließbare Gefäße gegeben. Nach 24 Stunden wird das Ethylen, das sich in den Gefäßen angesammelt hat, mit üblichen Nachweismethoden bestimmt. Die Ethylenentwicklung der mit den Wirkstoffzubereitungen behandelten Blattstücke wird mit derjenigen der Kontrollen verglichen.

Es bedeuten:

0 Ethylenentwicklung wie bei der Kontrolle
+ leicht erhöhte Ethylenentwicklung
++ stark erhöhte Ethylenentwicklung
+++ sehr stark erhöhte Ethylenentwicklung

In diesem Test zeigt die erfindungsgemäße Verbindung (I-1) eine bessere Wirksamkeit als N-Formyl-1-amino-cyclopropancarbonsäure.

Patentansprüche

1. 1-Amino-cyclopropancarbonsäure-Derivate der Formel

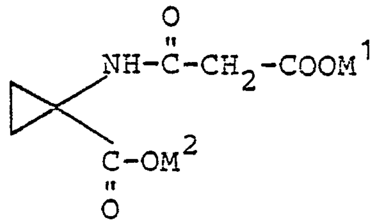

(I)

in welcher

$M^1$ und $M^2$ für Wasserstoff, Ammonium, ein Alkalimetall, ein Erdalkalimetall-Äquivalent oder ein Äquivalent eines Mangan-Kations stehen.

2. 1-Amino-cyclopropancarbonsäure-Derivate der Formel (I), in denen $M^1$ und $M^2$ für Wasserstoff, Ammonium, Natrium, Kalium, ein Äquivalent eines Magnesium- oder Calcium-Kations oder für ein Äquivalent eines Mangan-II-Kations stehen.

3. Verfahren zur Herstellung von 1-Amino-cyclopropancarbonsäure-Derivaten der Formel

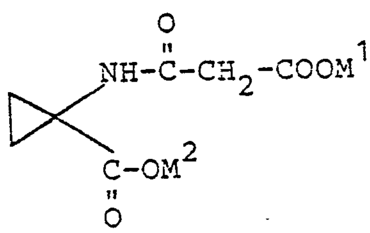

(I)

in welcher

$M^1$ und $M^2$ für Wasserstoff, Ammonium, ein Alkalimetall, ein Erdalkalimetall-Äquivalent oder ein Äquivalent eines Mangan-Kations stehen,

dadurch gekennzeichnet, daß man N-Malonyl-1-aminocyclopropancarbonsäure-di-benzylester der Formel

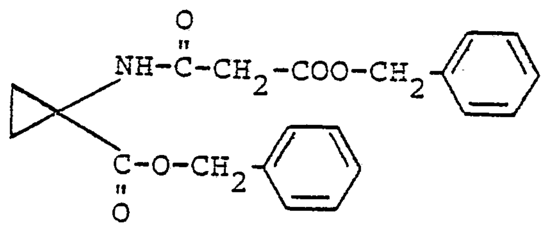

(II)

in Gegenwart eines Katalysators sowie in Gegenwart eines Verdünnungsmittels hydriert und gegebenenfalls anschließend die dabei entstehende Verbindung der Formel

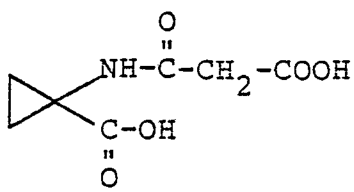

(I-1)

mit Basen der Formel

M OH (III)

in welcher

M für Ammonium, ein Alkalimetall, ein Erdalkalimetall-Äquivalent oder ein Äquivalent eines Mangan-Kations steht,

in Gegenwart eines Verdünnungsmittels umsetzt.

4. Pflanzenwuchsregulierende Mittel, gekennzeichnet durch einen Gehalt an mindestens einem 1-Amino-cyclopropancarbonsäure-Derivat der Formel (I).

5. Verfahren zur Regulierung des Pflanzenwachstums, dadurch gekennzeichnet, daß man 1-Amino-cyclopropancarbonsäure-Derivate der Formel (I) auf die Pflanzen und/oder deren Lebensraum ausbringt.

6. Verwendung von 1-Amino-cyclopropancarbonsäure-Derivaten der Formel (I) zur Regulierung des Pflanzenwachstums.

7. Verfahren zur Herstellung von pflanzenwuchsregulierenden Mitteln, dadurch gekennzeichnet, daß man 1-Amino-cyclopropancarbonsäure-Derivate der Formel (I) mit Streckmitteln und/oder oberflächenaktiven Stoffen vermischt.

8. N-Malonyl-1-aminocyclopropancarbonsäure-dibenzylester der Formel

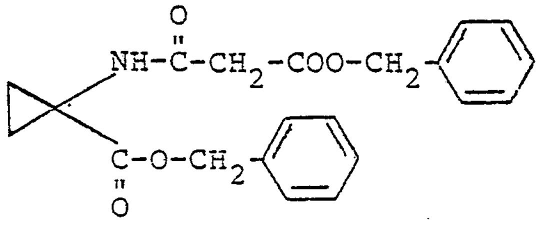

(II)

9. Verfahren zur Herstellung von N-Malonyl-1-amino-cyclopropancarbonsäure-dibenzylester der Formel

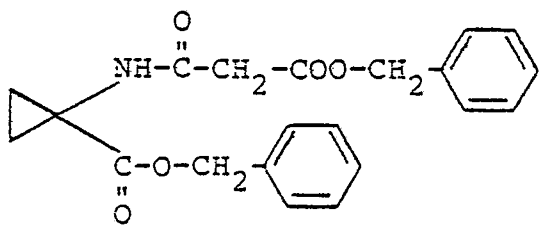

(II),

dadurch gekennzeichnet, daß man 1-Amino-cyclopropancarbonsäurebenzylester der Formel

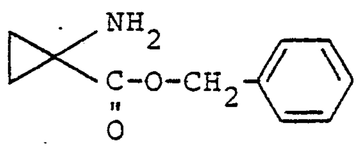

(IV)

bzw. dessen Hydrochlorid mit Kalium-monobenzylmalonat der Formel

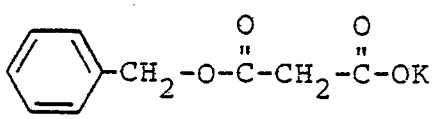

(V)

in Gegenwart eines Katalysators sowie in Gegenwart eines Verdünnungsmittels umsetzt.